# EUROPEAN PATENT APPLICATION

(11) **EP 4 599 662 A1**
(43) Date of publication of application: **13.08.2025**
(21) Application number: 24156382.4
(22) Date of filing: 07.02.2024
(51) Int. Cl.: A01D 75/18, A01D 89/00, A01F 15/10

(54) **METHOD FOR OPERATING AN AGRICULTURAL IMPLEMENT**

(71) Applicant: CNH Industrial Belgium N.V., 8210 Zedelgem (BE)
(72) Inventor: DEVROE, Jeroen, 8210 Zedelgem (BE)
(74) Representative: CNH Industrial IP Department

(57) **Abstract**

The present invention relates to a method for operating an agricultural machinery (1) with an implement (2), wherein the machinery (1) comprises at least one actuator (3) for lifting/lowering the implement (2) relative to a ground surface, and at least one sensor (4a, 4b) being arranged at a predetermined distance ahead of and away from the implement (2) in a harvesting direction (v) of the agricultural machinery (1), wherein the agricultural machinery (1) further comprises a control unit (5) configured to receive sensor signals from the at least one sensor (4a, 4b) and to operate the actuator (3). The suggested method comprises the steps of a) determining the ground profile (6) ahead of the implement (2) by the sensor (4, 4b), b) analyzing the determined ground profile (6), and c) selectively causing the actuator (3) to lift or lower the implement (2) according to the result of the analyzing step.

## Description

The present invention relates to an improved method for operating an implement of an agricultural machinery, and more particularly to a method of operating a pick-up of a baler towed behind a tractor.

As agricultural machinery is becoming larger over time in order to increase harvesting productivity, the speed of processing crop material and the advancing speed of the agricultural machinery during harvesting also increases. For example, modern round balers are equipped with so-called pick-ups configured for picking up the widest swaths possible so as to obtain a high cropping capacity. With such pick-ups, cutter bars or other implements that are guided close to the ground, in combination with increased advancing speeds over the field, the problem arises that the operator of the tractor or the implement cannot react quickly enough to obstacles in the field, such as ditches. These obstacles are often invisible to the naked eye. As a result, the implement may plunge into the obstacle causing structural damage to the implement and an immediate halt to harvesting operations.

So far, this problem has been addressed by installing stiffer and more rigid structures regarding the implement, its mount and its tines or by using larger guiding or support wheels that enable the implement to follow a ground profile in order to prevent damages to the implement in such above-mentioned situations. These countermeasures, however, increase the weight and size of the implement which also increases its manufacturing costs.

Accordingly, it is the object of the present invention to provide method for operating an agricultural machinery with an implement and an agricultural machinery thereto which overcomes at least some of the above-mentioned disadvantages of the prior art, comprises a simple design, is lightweight, easy to implement and ensures an enhanced performance and usability for the operator of the agricultural machinery.

This object is achieved by the method for operating an agricultural machinery with an implement comprising the features of claim 1 and by the agricultural machinery having the features of claim 15. Advantageous embodiments are described in the dependent claims.

According to the invention, there is provided a method for operating an agricultural machinery with an implement, wherein the agricultural machinery comprises at least one actuator for lifting and lowering the implement relative to a ground surface of a field, and at least one sensor being arranged at a predetermined distance ahead of and away from the implement in a harvesting direction of the agricultural machinery. The agricultural machinery further comprises a control unit configured to receive sensor signals from the at least one sensor and to operate the actuator. The method comprises the steps of:
a) determining the ground profile ahead of the implement in the harvesting direction by the at least one sensor;
b) analyzing the determined ground profile by the control unit;
c) selectively causing the actuator to lift or lower the implement by the control unit according to the result of the analyzing step.

Using the method according to the invention it is possible to prevent the implement from plunging into a ditch or encountering an obstacle in the field to be harvested. Thereby, a structural damage to the implement causing an immediate halt for the agricultural operation is prevented. According to the inventive method, the implement will be lifted or lowered resulting in an adjusted ground clearance of the implement regarding the ditch or obstacle which enables the agricultural machinery to safely pass and minimize harvesting losses.

The actuator for lifting or lowering the implement is preferably a hydraulically or electro-mechanically adjustable actuator coupled to the implement in such a manner to lift and lower the implement relative to the ground surface of the field or the agricultural machinery. The actuator may further comprise a positioning sensor which is configured to sense a position of at least a part of the actuator or of the implement in order to determine the lifting height and/or position of the implement relative to the agricultural machinery. The positioning sensor is preferably communicatively coupled with the control unit. Thus, the implement can be positioned accurately relative to the ground of the field.

In some embodiments, the at least one sensor may be designed to sense a ground clearance of the implement and transmit the determined ground clearance to the control unit. Optionally, the control unit is configured to determine the ground clearance of the implement through processing the determined ground profile of the at least one sensor in combination with the measurements of the optional positioning sensor of the actuator. Alternatively, an additional sensor for sensing the ground clearance may be attached directly to the implement.

The above suggested features enable an accurate determination of the ground clearance between the implement and the ground profile which can be used as feedback to the control unit when the implement is moved over a ditch or obstacle.

The control unit is preferably communicatively coupled to the at least one sensor by a communication network, such as a bus communication network. Further, the control unit may be arranged on the agricultural machinery, independent of the implement.

The control unit may additionally comprise a storage means in which, for example, data in reference to the implement can be stored, preferably the dimensions of the implement and/or the location of the implement relative to a certain location of the agricultural machinery in the harvesting direction, e.g. to a reference point of the agricultural machinery in the harvesting direction. With further advantage, the method of operating the agricultural machinery can be carried out by taking data in reference to the implement in account.

Even more preferably, in the storage means of the control unit, data in reference to the implement may be stored that comprises certain operating parameters of the implement such as a target ground clearance, ditch or obstacle passing strategies, or thresholds of deviations in the ground profile. In further embodiments, the data in reference to the implement can be input by the operator or automatically in communicative connection of the control unit with the implement.

The implement is preferably detachably coupled to the agricultural machinery. Hence, the method can be used with a variety of implements.

The at least one sensor is preferably not directly attached to the implement. The at least one sensor is preferably mounted on the agricultural machinery, independent of the implement. Thus, the costs of the agricultural machinery and the amount of required structural elements to carry out the inventive method can be reduced. Furthermore, the method can be carried out with a variety of different implements.

In the analyzing step b) the result can be a logical value. The logical value may represent the presence of a ditch or other obstacle in the determined ground profile that requires an action of lifting or lowering of the implement. Analogously, the logical value may also represent that no action regarding lifting or lowering the implement is needed. So, the implement is only selectively lifted or lowered in step c) when the result of step b) indicates the presence of a ditch or obstacle.

In the step c) the implement is preferably lifted to a retracted position or in general to a lifted position. Alternatively, the implement is selectively lifted or lowered relative to the determined ground profile in order to minimize losses of the agricultural harvesting operation. The implement may be lowered in step c) back to an operating position from the lifted or retracted position. When the implement is neither lifted nor lowered, the implement is in the operating position.

In another embodiment the implement is a pick-up configured to receive crop material from the ground.

In a further embodiment the agricultural machinery is a combination of a tractor and a baler towed behind the tractor in the harvesting direction. The implement is preferably connected to the tractor by a hitch and operatively coupled to the tractor. The control unit and the at least one sensor are preferably both located on the tractor. Hence, it is sufficient that only the tractor comprises the at least one sensor and the control unit, thereby lowering the costs for providing the structural elements for carrying out the method.

In some embodiments of the invention the at least one sensor is configured to determine the ground profile in a lateral direction to the harvesting direction. When the ground profile is determined in the harvesting direction and in the lateral direction, i.e. essentially perpendicular to the harvesting direction, a three-dimensional ground profile, especially a ground surface profile, can be determined over which the implement is moved in the harvesting direction enabling the control unit to additionally analyze the ground profile in a second dimension.

In other embodiments, the at least one sensor is configured to determine the ground profile in the harvesting direction based on an inclination of the agricultural machinery to the standard horizontal plane or based on an acceleration of the agricultural machinery in the standard vertical plane. For this purpose, the at least one sensor may be an inclination or an acceleration sensor, respectively, on board of the agricultural machinery.

The at least one sensor is optionally configured to estimate the ground profile based on a movement and/or position of at least one suspension component of the agricultural machinery. The movement and/or position of the at least one suspension component may be measured relatively to a chassis of the agricultural machinery. More specifically, the at least one sensor is preferably configured to estimate the ground profile based on a movement and/or position of the at least one suspension component of a front axle of the agricultural machinery in the case that the agricultural machinery is a wheeled vehicle. In other preferred embodiments, the at least one sensor is configured to estimate the ground profile based on a movement and/or position of the at least one suspension component ahead of the implement in the harvesting direction, in the case that the agricultural machinery is a tracked vehicle, or independently of the driving means.

In other embodiments the at least one sensor is a load or position sensor, preferably an optical sensor, more preferably a lidar sensor, located on the tractor. In embodiments in which the at least one sensor estimates the ground profile based on the movement and/or position of at least one suspension component, the at least one sensor may be a load sensor detecting the load or impacts onto a suspension component. Alternatively, the at least one sensor may be an optical sensor sensing a movement and/or a position of the at least one suspension component. In other embodiments, the at least one sensor may be a lidar sensor located on top of the tractor which is configured to monitor an observation area in front of the tractor in the harvesting direction. The lidar sensor can also generate a ground profile in the lateral direction perpendicular to the harvesting direction so as to three-dimensionally detect the ground surface profile. With the described sensor variations, it is possible to make use of already existing sensors of the agricultural machinery, which lowers the implementation costs and further enables a retro-fit installation.

In some embodiments step b) further comprises: determining a deviation within the determined ground profile by the control unit to detect the presence of a ditch in the harvesting direction; and comparing the determined deviation with a preset threshold by the control unit, wherein a ditch in the ground profile is considered present, if the detected deviation exceeds the preset threshold.

With further advantage, the determined deviation may indicate a ditch or other obstacle in the ground profile. The threshold may be input by the operator into the storage means of the control unit or may be automatically determined by the data in reference to the implement. The detection of a deviation may be in form of a logical value indicating the presence of a ditch or obstacle in front of the implement in the harvesting direction. The deviation may be an amplitude within the ground profile exceeding the preset threshold. Thus, the implement is lifted only, if the deviation, respectively the ditch, exceeds a certain threshold which would cause damage to the implement when it plunges into the ditch during movement in the harvesting direction.

Beneficially, step b) further comprises estimating characteristics of the detected ditch by the control unit, preferably at least one of a length, a depth, a contour, and a position of the detected ditch, based on the determined ground profile in the harvesting direction. With this information about the characteristics of the ditch or obstacle, the control unit can efficiently cause the actuator to lift and lower the implement in a way to reduce harvesting losses when the implement is passing over the ditch or obstacle and to prevent damages caused by plunging of the implement into such ditch or obstacle.

Advantageously, step b) further comprises estimating a travel distance in the harvesting direction at which the control unit causes the actuator to lift the implement based on the estimated characteristics of the detected ditch relative to the location of the implement in the harvesting direction. The control unit may preferably selectively lift or lower the implement according to step c) when the agricultural machinery has passed the estimated travel distance indicating the position of the ditch.

In another embodiment step b) further comprises estimating a point in time by the control unit at which the control unit causes the actuator to lift the implement based on the estimated characteristics of the detected obstacle relative to the location of the implement and an advancing speed of the agricultural machinery in the harvesting direction. The control unit may also be communicatively connected to a speed sensor to detect an actual advancing speed of the agricultural machinery in the harvesting direction. The control unit may also adjust the point in time based on the actual advancing speed at which it causes the actuator to lift the implement according to step c). The point in time may be absolute or relative to the detection of the ditch in step b). When the implement is lifted, the ground clearance of the implement is adjusted or increased when the implement is passing over the ditch.

In further embodiments step b) further comprises estimating a point in time by the control unit at which the control unit causes the actuator to lower the implement based on the estimated characteristics of the detected ditch and the advancing speed of the agricultural machinery in the harvesting direction. The point in time to lower the implement may be similarly determined as the point in time to lift the implement as described above. When the implement is lowered the ground clearance of the implement is adjusted in reference to the determined ground profile reducing harvesting losses when the implement is passing over the ditch.

Optionally, in step a) the ground profile is determined by the control unit based on multiple of ground profile signals of the at least one sensor in the harvesting direction. Preferably, the control unit may store multiple ground profile signals of the at least one sensor in the storage means and analyze a certain amount of ground profile signals at once. This measure makes efficient use of the computing capacity of the storage means as it can be used in the meantime for other processing tasks of the agricultural machinery.

Preferably, step b) further comprises determining a lifting height of the implement by the control unit for which the control unit causes the actuator to lift the implement based on the characteristics of the detected ditch. The lifting height may be monitored during lifting or lowering in step c) by the positioning sensor of the actuator or of the implement. Hence, the implement can be sufficiently lifted to pass the ditch. Additionally, harvesting losses are minimized.

Additionally, the control unit may further determine multiple lifting heights or lowering heights for each point in time in form of a control or a closed loop control in combination with a ground clearance monitoring of the implement to follow the contour of the ditch, when the implement is passing over the ditch, thereby minimizing harvesting losses and preventing the implement from mechanical damages.

Preferably, when the implement is neither lifted nor lowered by the actuator according to step c), the implement follows the ground profile in the harvesting direction through guiding wheels attached at lateral end portions of the implement. With further advantage, the implement is drawn over the ground surface of the field in a conventional way, whereas only in the case of the result in the analyzing step b) of detecting a ditch in the determined ground profile, the implement will be selectively lifted or lowered according to step c). Thus, the implement can be a lightweight construction and the manufacturing costs can be reduced.

According to the invention, further an agricultural machinery configured to perform the method according to the invention is suggested, comprising at least one actuator for lifting and lowering the implement relative to a ground surface of a field, and at least one sensor being arranged at a predetermined distance ahead of and away from the implement in a harvesting direction of the agricultural machinery. The agricultural machinery further com-prises a control unit configured to receive sensor signals from the at least one sensor and to operate the actuator.

Any feature described in reference to the method for operating an agricultural machinery according to the invention may also be applicable to the agricultural machinery itself and vice versa.

In the following, the invention will be explained in more detail in reference to preferred embodiments with the drawings in which:
- Fig. 1: shows schematically the agricultural machinery traveling along the filed in the harvesting direction;
- Fig. 2: shows schematically the agricultural machinery of Fig. 1 wherein the implement is passing over a ditch; and
- Fig. 3: describes a process flow chart of the method according to the invention.

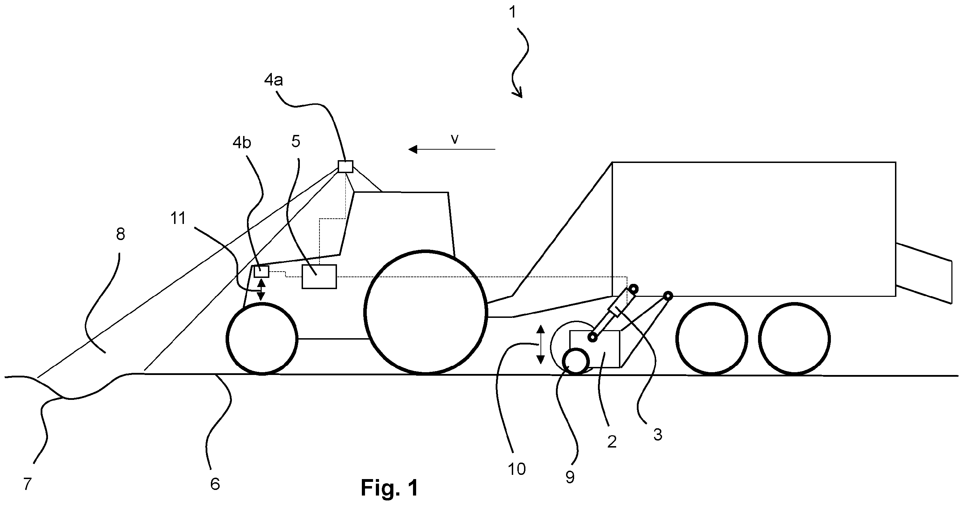

In Fig. 1 the agricultural machinery 1 according to the invention is shown in an embodiment comprised of a combination of a tractor coupled to a baler by a hitch or a three-point hitch. Implement 2 is a pick-up for receiving crop material from the ground. In other not shown embodiments, the implement 2 may be a cutter bar or similar implement for harvesting purposes which is moved over the field in close distance to the ground surface.

Actuator 3 is a hydraulic cylinder operated by the hydraulic circuit of the tractor. In other non-pictured embodiments, the actuator 3 may be an electro-mechanically driven actuator 3. The implement 2 is pivotably mounted to the baler. The actuator 3 may also be decoupled or may comprise a floating state to enable the implement 2 to follow the ground profile 6 only by use of guiding wheels 9.

Further, in Fig. 1 two sensors 4a, 4b are shown. The first sensor 4a, embodied as a lidar sensor, is mounted to the roof of the cabinet of the tractor for monitoring an observation area 8 ahead of the tractor. The other sensor 4b is a suspension sensor mounted to the chassis of the tractor monitoring a movement and/or a position of at least one suspension component 11 of the tractor, for instance the movement of the front axle. Sensor 4a is designed as a lidar sensor. The suspension sensor 4b is designed as a load sensor, a contactless sensor, an optical sensor, a potentiometer, an acceleration, or an inclination sensor. In general, the position of the lidar sensor 4a or of the suspension sensor 4b may be changed appropriately.

It must be noted that only one of the pictured sensors 4a, 4b is necessary to perform the inventive method. For the sake of simplicity, both sensors 4a, 4b are shown in the same figure. Both sensors 4a, 4b are communicatively coupled to the control unit 5 located on the tractor via a bus network known in the art. Further, the control unit 5 is operatively connected to the actuator 3 to selectively cause the actuator 3 to lift or lower the implement 2.

The lidar sensor 4a is designed to determine a ground profile 6 of the field ahead of the implement and to transmit the determined ground profile 6 to the control unit 5 which is configured to analyze the ground profile 6 and detect deviations within the determined ground profile 6. The detected deviations indicate ditches 7 over which the agricultural machinery 1 will travel in the harvesting direction v.

The suspension sensor 4b is designed to determine the ground profile 6 of the field under the tractor in reference to a reaction of the at least one suspension component during passing over the ditch 7. It is sufficient if the suspension sensor 4b is mounted on the tractor ahead of the implement 2 in the harvesting direction. The suspension sensor 4b therefore does not need to be mounted close to a front axle or a front portion of the tractor.

In the pictured embodiment, the suspension sensor 4b is configured to sense a movement or change in position of the at least one suspension component in reaction of passing the ditch 7 in the harvesting direction v. In other not shown embodiments, the suspension sensor 4b may alternatively sense reaction forces of the at least one suspension component or the chassis of the tractor when passing the ditch 7 in the harvesting direction v. In further not shown embodiments, the suspension sensor 4b may sense an acceleration in the standard vertical plane or in an inclination of the tractor to the standard horizontal plane to determine the ground profile which the tractor is passing.

Further, in another embodiment (not illustrated), a ground clearance sensor is directly attached to the implement 2 and communicatively coupled with the control unit 5. The ground clearance sensor is configured to detect the actual ground clearance of the implement to the ground. The control unit 5 may therefore use the actual ground clearance as a control signal or feedback and compare the actual ground clearance with an estimated ground clearance based on the data in reference to the implement and the determined ground clearance. Subsequently, based on the comparison between the estimated ground clearance and the actual ground clearance, the control unit 5 may selectively instruct to lift or lower the implement in order to minimize harvesting losses when passing the ditch 7.

Additionally, also not shown in the embodiment of Fig. 1, it is possible for the operator of the tractor to input dimensions and operating parameters of the implement 2 directly to the control unit 5 or to the storage means of the control unit 5 by a user interface communicatively coupled to the control unit 5. This enables the control unit 5 to determine travel lengths or points in time at which the implement will pass the ditch 7 and when it will cause the actuator 3 to selectively lift or lower the implement 2 after traveling the determined travel length or at certain predetermined points in time. In other embodiments, the control unit may automatically receive data in reference to the implement through a communicative coupling with the implement.

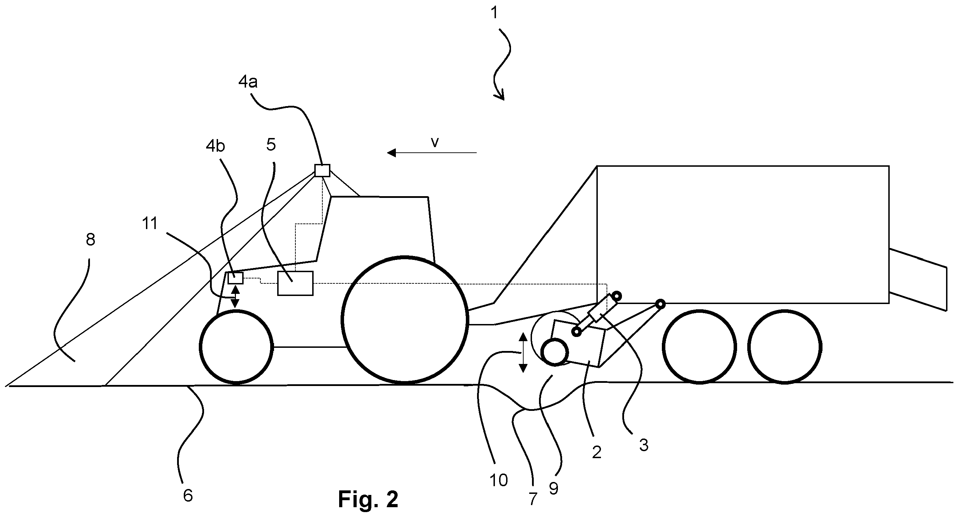

Fig. 2 shows the agricultural machinery of Fig. 1, wherein the tractor has already passed the ditch 7, and the implement 2 is lifted. In this embodiment, the implement 2 is lifted during the passage of the ditch 7. The implement 2 is lifted into a retracted position, also called lifted position, so that the implement 2 is sufficiently raised to not plunge into the ground profile of the ditch when the tractor or the baler passes the ditch. In other embodiments, the implement 2 may be lowered or lifted respectively to follow the contour of the ditch 7 in a predetermined distance in order to reduce harvesting losses.

When the tractor or the baler passes the ditch 7, both will be inclined relatively to the standard horizontal plane at respective points in time not shown in Fig. 2. Thus, it is important to detect the characteristics and the location of the ditch 7 relative to the actual location of the agricultural machinery 1 to accordingly adjust the ground clearance of the implement 2 during the passage of the ditch 7.

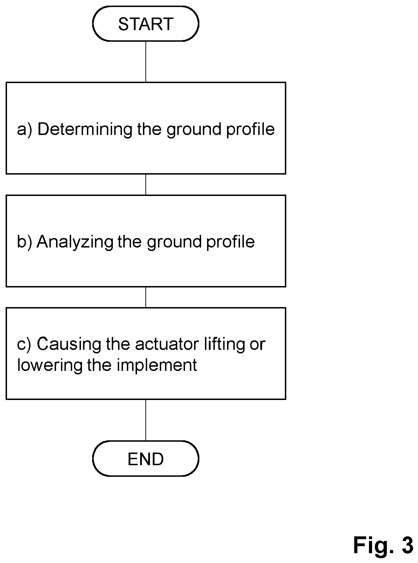

In Fig. 3, the method according to the invention for operating the agricultural machinery 1 of Figs. 1 and 2 will be described now in further detail.

Step a) comprises the determination of the ground profile 6. As described above, the ground profile 6 is determined by the at least one sensor 4a, 4b. In other embodiments, also a combination of multiple different sensors 4a, 4b may be used to determine the ground profile 6. The use of multiple different sensors can enhance the accuracy of the determined ground profile 6. The ground profile 6 according to this embodiment is determined as a contour of hight differences along the harvesting direction v.

In the following step b) the determined ground profile 6 is analyzed. In this step b) the control unit 5 will detect any deviation within the determined ground profile 6 which exceeds a certain predetermined threshold. The threshold can be input by the operator or be part of the data in reference to the implement 2.

The result of the analyzing step b) is a logic value indicating the presence of a ditch 7 in the ground profile 6 ahead of the implement 2. According to the result of step b), the control unit 5 causes the actuator 3 to lift or lower the implement 2 respectively.

In some cases, the operator can choose a strategy to pass ditches 7. In other cases, strategies to pass the ditch 7 are automatically determined by the control unit 5 in combination with the data in reference to the implement 2.

A first strategy according to this embodiment is to lift the implement 2 when passing the ditch 7 in order to increase the ground clearance to prevent plunging of the implement 2 into the ground profile 6.

Another second strategy of a non-illustrated embodiment is to follow the contour of the determined ground profile 6 when passing the ditch 7 in order to minimize harvesting losses.

In the case of a detection of a ditch 7 within the ground profile 6 ahead of the implement 2 according to this embodiment, the control unit 5 will determine the distance between the ditch 7 and the implement 2 based on the determined ground profile 6 and the speed of the agricultural machinery 1 in the harvesting direction v. Based on the distance between the determined distance between the ditch 7 and the implement 2, the control unit 5 will determine one or multiple points in time at which the control unit 5 will cause the actuator 3 to selectively lift or lower the implement 2 in step c).

In the case of no detection of a ditch 7 in the ground profile 6 ahead of the implement 2 according to this embodiment, the control unit 5 will not cause the actuator 3 to selectively lift or lower the implement 2. So, the implement 2 is guided via its guiding wheels 9 over the ground of the field in order to follow the ground profile 6 of the field in a conventional manner.

In another non-illustrated embodiment according to the second strategy, the control unit 5 may determine a lifting or lowering height 10 for each determined point in time to enable the implement 2 to follow the determined ground profile 6 when passing the ditch 7. To realize this, the control unit 5 receives actual position signals of a positioning sensor of the actuator 3 or the implement 2 indicating a position of the implement 2 relative to the baler. Alternatively, the control unit 5 may receive an actual determined ground clearance of the ground clearance sensor attached to the implement.

Alternatively, in another non-illustrated embodiment the control unit 5 may determine a travel distance based on the location of the ditch 7 and the advancing speed of the agricultural machinery 1 in the harvesting direction v at which the control unit 5 will cause the actuator 3 to selectively lift or lower the implement 2 in step c).

In the last method step c), the control unit 5 causes the actuator 3 via operative coupling with the actuator 3 to selectively lift or lower the implement 2 according to the result of the analyzing step b). The implement 2 is therefore lifted and or lowered according to the determined points in time or according to the determined travel distance. In the case that the result of the analyzing step b) comprises the result that there is no ditch present ahead of the implement, the control unit 5 will not cause the actuator 3 to lift or lower the implement 2. In this case, the implement 2 will be conventionally guided along the ground profile by its guiding wheels 9 in a preset distance to the ground profile of the field.

The invention is not limited to the described embodiments. If technically feasible, the specified embodiments can be combined to form new embodiments which have not been described above.

With the present invention, an enhanced method for operating an agricultural machinery and a respective agricultural machinery have been presented which enable a safe passage of a ditch or an obstacle, are comfortable to use and can be provided at low cost.

### List of reference signs

- 1: agricultural machinery
- 2: implement
- 3: actuator
- 4: chassis
- 4a: Lidar sensor
- 4b: suspension sensor
- 5: control unit
- 6: ground profile
- 7: ditch
- 8: observation area
- 9: guiding wheels
- 10: lifting or lowering hight
- 11: movement and/or position of the at least one suspension component
- v: harvesting direction

## Claims

1. Method for operating an agricultural machinery (1) with an implement (2), the agricultural machinery (1) comprising:
at least one actuator (3) for lifting and lowering the implement (2) relative to a ground surface of a field, and
at least one sensor (4a, 4b) being arranged at a predetermined distance ahead of and away from the implement (2) in a harvesting direction (v) of the agricultural machinery (1),
wherein the agricultural machinery (1) comprises a control unit (5) configured to receive sensor signals from the at least one sensor (4a, 4b) and to operate the actuator (3), the method comprising the steps of:
a) determining the ground profile (6) ahead of the implement (2) in the harvesting direction (v) by the at least one sensor (4a, 4b);
b) analyzing the determined ground profile (6) by the control unit (5);
c) selectively causing the actuator (3) to lift or lower the implement (2) by the control unit (5) according to the result of the analyzing step.

2. Method according to claim 1, **characterized in that** the implement (2) is a pick-up configured to receive crop material from the ground.

3. Method according to one of the previous claims, **characterized in that** the agricultural machinery (1) is a combination of a tractor and a baler.

4. Method according to one of the previous claims, **characterized in that** the at least one sensor (4a, 4b) is configured to determine the ground profile (6) in a lateral direction to the harvesting direction (v).

5. Method according to one of the previous claims, **characterized in that** the at least one sensor (4a, 4b) is configured to estimate the ground profile (6) based on a movement and/or position (11) of at least one suspension component of the agricultural machinery (1).

6. Method according to claim 3, **characterized in that** the at least one sensor (4a, 4b) is a load or position sensor, preferably an optical sensor, more preferably a lidar sensor, located onboard of the tractor.

7. Method according to one of the previous claims, **characterized in that** step b) further comprises:
determining a deviation within the determined ground profile (6) by the control unit (5) to detect the presence of a ditch or obstacle (7) in the harvesting direction (v); and
comparing the determined deviation with a preset threshold by the control unit (5), wherein a ditch or obstacle (7) in the ground profile is considered present, if the detected deviation exceeds the preset threshold.

8. Method according to claim 7, **characterized in that** step b) further comprises:
estimating characteristics of the detected ditch (7) by the control unit (5), preferably at least one of a length, a depth, a contour, and a position of the detected ditch (7), based on the determined ground profile (6) in the harvesting direction (v).

9. Method according to claim 7, **characterized in that** step b) further comprises:
estimating a travel distance (7) in the harvesting direction (v) at which the control unit (5) causes the actuator (3) to lift the implement (2) based on the estimated characteristics of the detected ditch (7) relative to the location of the implement (2) in the harvesting direction (v).

10. Method according to claim 7, **characterized in that** step b) further comprises:
estimating a point in time by the control unit (5) at which the control unit (5) causes the actuator (3) to lift the implement (2) based on the estimated characteristics of the detected ditch (7) relative to the location of the implement (2) and an advancing speed of the agricultural machinery (1) in the harvesting direction (v).

11. Method according to claims 9 and 10, **characterized in that** step b) further comprises:
estimating a point in time by the control unit (5) at which the control unit (5) causes the actuator (3) to lower the implement (2) based on the estimated characteristics of the detected ditch (7) and the advancing speed of the agricultural machinery (1) in the harvesting direction (v).

12. Method according to any of the previous claims, **characterized in that** in step a) the ground profile (6) is determined by the control unit (5) based on multiple of ground profile signals of the at least one sensor (4) in the harvesting direction (v).

13. Method according to claim 9, **characterized in that** step b) further comprises:
determining a lifting height (10) of the implement by the control unit (5) for which the control unit (5) causes the actuator (3) to lift the implement (2) based on the characteristics of the detected ditch (7).

14. Method according to one of the previous claims, **characterized in that** when the implement (2) is neither lifted nor lowered by the actuator (3), the implement (2) follows the ground profile (6) in the harvesting direction (v) through guiding wheels (9) attached at lateral end portions of the implement (2).

15. Agricultural machinery (1) configured to perform the method of any of the previous claims comprising at least one actuator (3) for lifting and lowering the implement (2) relative to a ground surface (6) of a field, and at least one sensor (4) being arranged at a predetermined distance ahead of and away from the implement (2) in a harvesting direction (v) of the agricultural machinery (1), wherein the agricultural machinery (1) further comprises a control unit (5) configured to receive sensor signals from the at least one sensor (4) and to operate the actuator (3).
